# EUROPÄISCHE PATENTANMELDUNG

(11) **EP 1 625 981 A1**
(43) Veröffentlichungstag der Anmeldung: **15.02.2006**
(21) Anmeldenummer: 05016406.0
(22) Anmeldetag: 28.07.2005
(51) Int. Cl.: B60R 21/20

(54) **Gassackmodul mit Abströmöffnung**

(30) Priorität: 13.08.2004 DE 202004012721 U
(71) Anmelder: TRW Automotive Safety Systems GmbH, 63743 Aschaffenburg (DE)
(72) Erfinder: Keutz, Markus, 64380 Rossdorf (DE)
(74) Vertreter: Strass, Jürgen

(57) **Zusammenfassung**

Ein Gassackmodul für eine Fahrzeuginsassen-Rückhaltevorrichtung umfaßt einen Gasgenerator (12) zum Befüllen eines Gassacks, eine in einem festen Bauteil (10) des Gassackmoduls gebildete Abströmöffnung (14), durch die Gas abströmen kann, und eine Klappenvorrichtung (16), die in einer Schließstellung die Abströmöffnung (14) abdeckt und in einer Öffnungsstellung die Abströmöffnung (14) freigibt. Es ist ein Sperrmechanismus vorgesehen, der die Klappenvorrichtung (16) in der Öffnungsstellung hält.

## Beschreibung

Die Erfindung betrifft ein Gassackmodul für eine Fahrzeuginsassenrückhaltevorrichtung, mit einem Gasgenerator zum Befüllen eines Gassacks, einer in einem festen Bauteil des Gassackmoduls gebildeten Abströmöffnung, durch die Gas abströmen kann, und einer Klappenvorrichtung, die in einer Schließstellung die Abströmöffnung abdeckt und in einer Öffnungsstellung die Abströmöffnung freigibt.

Abströmöffnungen im Gassackmodul können dazu dienen, unter bestimmten Umständen einen zu hohen Innendruck im Gassack zu vermeiden. Es sind Gassackmodule bekannt, bei denen eine in den Gasgeneratorträger oder in eine Gehäusewand des Moduls integrierte Klappe eine Abströmöffnung verschließt und bei Bedarf freigibt, wobei die Klappe mittels eines Biegescharniers aus einer Schließstellung in eine Öffnungsstellung verschwenkt wird. Um zu gewährleisten, daß die Klappe nach der Freigabe der Abströmöffnung auch unter besonderen Umständen, wie zum Beispiel den bei einem Sekundäraufprall des Fahrzeugs auftretenden Beschleunigungen, sicher in der Öffnungsstellung verbleibt, ist die Biegesteifigkeit des Scharniers hoch auszulegen. Dies hat jedoch zur Folge, daß große Stellkräfte und damit aufwendige und große Aktuatoren zum Öffnen der Klappe erforderlich sind und das Öffnungsverhalten insbesondere bezüglich Zeit für die Öffnung der Klappe negativ beeinflußt wird.

Aus der US 2004/0051286 A1 ist ein Gassackmodul der eingangs genannten Art bekannt, bei dem ein spezieller Haltemechanismus eine Klappe, die eine Abströmöffnung abdeckt, in der geschlossenen Position halten kann. Ein ähnlich wirkender Mechanismus ist auch in der WO 98/31570 A1 gezeigt.

Die Erfindung schafft ein Gassackmodul mit einer Abströmöffnung, die leicht und zuverlässig freigegeben werden kann.

Bei einem Gassackmodul der eingangs genannten Art wird dies erfindungsgemäß durch einen Sperrmechanismus erreicht, der die Klappenvorrichtung in der Öffnungsstellung hält. Die Erfindung beruht auf der Erkenntnis, daß ein eigens vorgesehener Sperrmechanismus, der mit einfachen Mitteln realisierbar ist, eine deutlich einfachere Auslegung der Klappenvorrichtung erlaubt. Eine hohe Biegesteifigkeit eines Scharniers ist nicht mehr erforderlich, da der Sperrmechanismus für ein Verbleiben der Klappenvorrichtung in der Öffnungsstellung sorgt.

Eine Auslegung des Sperrmechanismus dahingehend, daß er bei einer Überführung der Klappenvorrichtung aus der Schließstellung in die Öffnungsstellung automatisch aktiviert wird, erweist sich als besonders vorteilhaft, weil keine zusätzlichen Maßnahmen zur tatsächlichen Bereitstellung der Sperrwirkung notwendig sind, die synchron zur Öffnung der Klappenvorrichtung aktiviert werden müßten.

Der Sperrmechanismus kann beispielsweise wenigstens ein an die Klappenvorrichtung angeformtes Rastelement aufweisen.

Die Erfindung erlaubt es, die Klappenvorrichtung aus Kunststoff auszubilden. Eine Klappenvorrichtung aus Kunststoff hat gegenüber einem bisher üblichen Metallstanzteil neben dem reduzierten Gewicht auch den Vorteil der freien Gestaltbarkeit, da per Kunststoff-Spritzgußtechnik nahezu jede gewünschte Form herstellbar ist, insbesondere auch spezielle dreidimensionale Formen.

Vorzugsweise ist die Klappenvorrichtung über ein Filmscharnier aus der Schließstellung in die Öffnungsstellung überführbar. Ein Filmscharnier ist leicht herstellbar und erfordert nur geringe Biegekräfte für eine Klappenverschwenkung, so daß ein einfacher Aktuator zur Betätigung der Klappenvorrichtung eingesetzt werden kann.

Weitere Merkmale und Vorteile der Erfindung ergeben sich aus der nachfolgenden Beschreibung eines Ausführungsbeispiels und aus den beigefügten Zeichnungen, auf die Bezug genommen wird. In den Zeichnungen zeigen:
- Figur 1 eine perspektivische Ansicht eines Teils eines erfindungsgemäßen Gassackmoduls;
- Figur 2 eine schematische Vorderansicht der Klappenvorrichtung des Gassackmoduls; und
- Figur 3 eine seitliche Schnittansicht der Klappenvorrichtung.

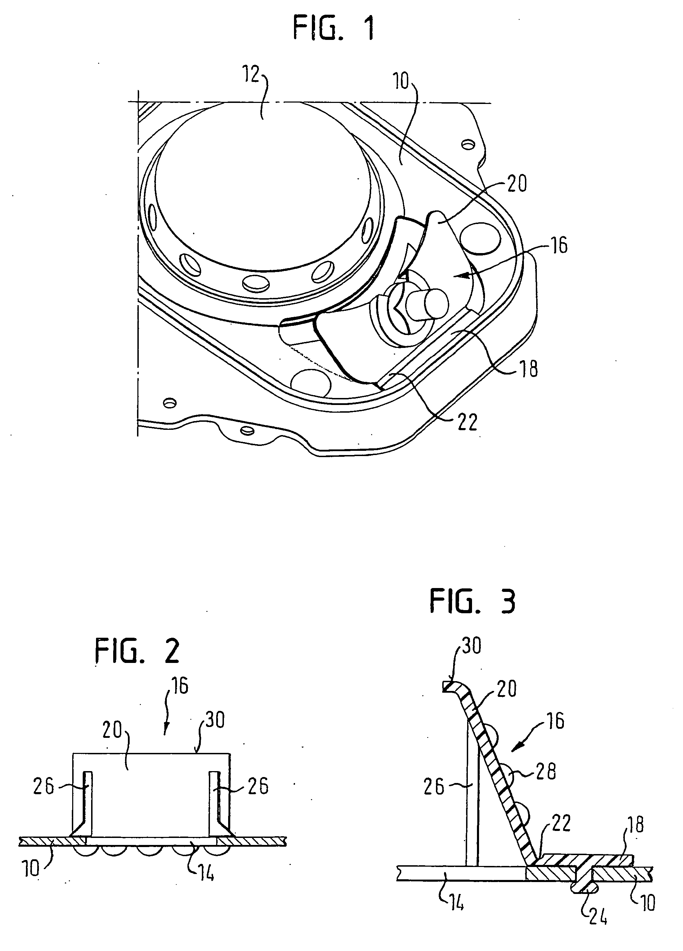

In Figur 1 ist ein auf einem Metallgasgeneratorträger 10 montierter Gasgenerator 12 zur Befüllung eines Gassacks dargestellt, der Teil eines Gassackmoduls ist. Im Gasgeneratorträger 10 ist eine Abströmöffnung 14 (siehe Figuren 2 und 3) vorgesehen. Mittels einer Klappenvorrichtung 16 kann die Abströmöffnung 14 abgedeckt oder, wie in den Figuren gezeigt, freigegeben werden. Zur Regulierung des Drucks im Gassack kann durch eine Freigabe der Abströmöffnung 14 Gas abgeleitet werden. Die Abströmöffnung 14 kann auch in einem anderen festen Bauteil des Gassackmoduls gebildet sein, zum Beispiel in einer Gehäusewand. Der Betätigungsmechanismus (Aktuator) und die Steuerung zum Öffnen und Schließen der Klappenvorrichtung 16 sind nicht Gegenstand der Erfindung, weshalb auf eine diesbezügliche detaillierte Erläuterung verzichtet wird.

Die Klappenvorrichtung 16 besteht vollständig aus Kunststoff und kann in bewährter Spritzgußtechnik hergestellt werden. Die Klappenvorrichtung 16 weist einen Befestigungsabschnitt 18 und einen Klappenabschnitt 20 auf, zwischen denen ein Filmscharnier 22 gebildet ist. Der Befestigungsabschnitt 18 ist durch Ultraschallschweißen oder Heißverstemmen (siehe Bezugszeichen 24 in Figur 3) am Gasgeneratorträger 10 befestigt, der als Blechstanzteil ausgeführt ist. Somit kann der Klappenabschnitt 20 aus einer Schließstellung, in der die Abströmöffnung 14 abgedeckt ist, in eine Öffnungsstellung verschwenkt werden, in der die Abströmöffnung 14 freigegeben ist. Die Klappenvorrichtung 16 muß nicht notwendigerweise am Gasgeneratorträger 10 befestigt sein. Es ist zum Beispiel auch eine Befestigung an einer Gehäusewand oder einer Abdeckkappe des Gassackmoduls denkbar.

Ein Sperrmechanismus in Form von zwei an die Klappenvorrichtung 16 angespritzten Rasthaken 26 sorgt automatisch dafür, daß die Klappenvorrichtung 16 nach dem Aufklappen in der Öffnungsstellung verbleibt. In der Öffnungsstellung stützen sich die Rasthaken 26 am Rand der Abströmöffnung 14 ab und verhindern so ein Zuklappen des Klappenabschnitts 20. Der Sperrmechanismus kann auch auf andere Weise verwirklicht sein, zum Beispiel durch Rasthaken, die am Gasgeneratorträger 10 angespritzt sind.

Zur Verbesserung der Stabilität des Klappenabschnitts 20 ist dieser mit Rippen 28 versehen, die bei entsprechender Auslegung des Spritzformwerkzeugs für die Klappenvorrichtung 16 nicht nachträglich angeformt werden müssen. Für eine optimale Abdichtung der Abströmöffnung 14 in der Schließstellung der Klappenvorrichtung 16 ist am Rand des Klappenabschnitts 20 eine Dichtlippe 30 vorgesehen, die im Vergleich zum Klappenabschnitt 20 eine geringere Shore-Härte aufweist. Die Dichtlippe 30 kann zum Beispiel in einem Zweikomponentenspritzverfahren an den Klappenabschnitt 20 angeformt werden.

Im Falle eines Kunststoffgasgeneratorträgers kann die Klappenvorrichtung 16 mit dem Sperrmechanismus in einem Ein- oder Mehrkomponentenspritzverfahren zusammen mit dem Gasgeneratorträger in einem Spritzformwerkzeug gespritzt werden.

## Patentansprüche

1. Gassackmodul für eine Fahrzeuginsassen-Rückhaltevorrichtung, mit einem Gasgenerator (12) zum Befüllen eines Gassacks, einer in einem festen Bauteil (10) des Gassackmoduls gebildeten Abströmöffnung (14), durch die Gas abströmen kann, und einer Klappenvorrichtung (16), die in einer Schließstellung die Abströmöffnung (14) abdeckt und in einer Öffnungsstellung die Abströmöffnung (14) freigibt, **gekennzeichnet durch** einen Sperrmechanismus, der die Klappenvorrichtung (16) in der Öffnungsstellung hält.

2. Gassackmodul nach Anspruch 1, **dadurch gekennzeichnet, daß** der Sperrmechanismus so ausgelegt ist daß er bei einer Überführung der Klappenvorrichtung (16) aus der Schließstellung in die Öffnungsstellung automatisch aktiviert wird.

3. Gassackmodul nach Anspruch 1 oder 2, **dadurch gekennzeichnet, daß** der Sperrmechanismus wenigstens ein an die Klappenvorrichtung (16) angeformtes Rastelement (26) aufweist.

4. Gassackmodul nach einem der vorhergehenden Ansprüche, **dadurch gekennzeichnet, daß** der Sperrmechanismus wenigstens ein Rastelement aufweist, das an das Bauteil (10) angeformt ist, in dem die Abströmöffnung gebildet ist.

5. Gassackmodul nach einem der vorhergehenden Ansprüche, **dadurch gekennzeichnet, daß** die Klappenvorrichtung (16) aus Kunststoff gebildet ist.

6. Gassackmodul nach Anspruch 5, **dadurch gekennzeichnet, daß** die Klappenvorrichtung (16) über ein Filmscharnier (22) aus der Schließstellung in die Öffnungsstellung überführbar ist.

7. Gassackmodul nach Anspruch 5 oder 6, **dadurch gekennzeichnet, daß** die Klappenvorrichtung (16) eine angeformte Dichtlippe (30) aufweist.

8. Gassackmodul nach einem der Ansprüche 5 bis 7, **dadurch gekennzeichnet, daß** die Klappenvorrichtung (16) Verstärkungsrippen (28) aufweist.

9. Gassackmodul nach einem der Ansprüche 5 bis 8, **dadurch gekennzeichnet, daß** das Bauteil (10), in dem die Abströmöffnung (14) gebildet ist, metallisch ist und die Klappenvorrichtung (16) durch eine Ultraschallschweiß- oder eine Heißstemmverbindung an dem Bauteil (10) befestigt ist.

10. Gassackmodul nach einem der Ansprüche 1 bis 8, **dadurch gekennzeichnet, daß** die Klappenvorrichtung einstückig mit einem Kunststoffgasgeneratorträger des Gassackmoduls ausgebildet ist.
